# EUROPEAN PATENT APPLICATION

(11) **EP 4 763 490 A1**
(43) Date of publication of application: **24.06.2026**
(21) Application number: 24307180.0
(22) Date of filing: 19.12.2024
(51) Int. Cl.: B29D 11/00

(54) **OPHTHALMIC ARTICLE AND METHOD FOR MANUFACTURING SAME**

(71) Applicant: Essilor International, 94220 Charenton-Le-Pont (FR)
(72) Inventor: MOREAU, Patrick, 10120 BANGKOK (TH)
(74) Representative: Plasseraud IP

(57) **Abstract**

The present invention relates to a method for manufacturing an ophthalmic article comprising a lens substrate and an ophthalmic wafer wherein the ophthalmic wafer has a blunt edge between a first surface thereof and its lateral surface; wherein the method comprises: providing (S100) the ophthalmic wafer; forming a mold cavity (S200); filling (S300) the mold cavity with a polymerizable composition; and curing (S400) the polymerizable composition to harden it, thus forming the lens substrate thereby obtaining the ophthalmic article. The present invention also relates to ophthalmic article (1) comprising: a lens substrate (12) and an ophthalmic wafer (11) with a first surface (111) in contact with the lens substrate (12), a second surface (112) opposite the first surface (111) and a lateral surface (113) joining the first surface (111) and the second surface (112), the ophthalmic wafer (11) having a blunt edge (113) between the first surface (111) and the lateral surface (112).

## Description

### Technical field

The present application relates to the technical field of ophthalmic articles and in particular to ophthalmic articles having a lens substrate and an ophthalmic wafer in contact with the lens substrate used notably in the management of myopia.

### Prior art

Methods for manufacturing an ophthalmic article comprising a first surface, a second surface and a lateral surface joining the first surface to the second surface, are various. Here the first surface and the second surface of the ophthalmic article are surfaces through which light travels from a scene to the wearer's eye. Such methods utilize different approaches.

One of such approaches is described in WO 2017/216143 A1. The method of this document uses two molding shells joined together through an adhesive tape to form a molding cavity: i.e. the molding cavity is limited by both molding shells and the adhesive tape. A polymerizable composition is then injected into the molding cavity and hardened. After pealing off the adhesive tape and separating the molding shells, a lens blank is recovered.

In some cases, the addition of an ophthalmic wafer to the ophthalmic lens is desired. For example, US 9638938 B2 describes a method where, in addition the description made above for WO 2017/216143 A1, a polarizing film is secured onto the object-side molding shell while leaving a space between the film and the object-side molding shell, and then both the object-side molding shell and the eye-side molding shell are joined together through the adhesive tape. The resulting ophthalmic article comprises a first lens substrate, a second lens substrate and a polarizing film sandwiched between both substrates. Since the polarizing film is secured onto the object-side molding shell so that a relatively thin gap remains between both elements, the first lens substrate is usually thinner than the second lens substrate.

Although this method seemingly works well for adding a polarizing film into the ophthalmic lens, the present authors have discovered that when the polarizing film is replaced with an injection-molded wafer, bubbles form during casting and hardening of the polymerizable composition at the rim of the ophthalmic article between the injection-molded wafer and the first lens substrate on the one hand and between the injection-molded wafer and the second lens substrate on the other hand.

Thus, there is a need to find a solution to avoid formation of bubbles at the rim of the ophthalmic article.

### Summary

This disclosure improves the situation.

To this aim, the present invention provides a method for manufacturing an ophthalmic article comprising a lens substrate and an ophthalmic wafer with a first surface in contact with the lens substrate, a second surface opposite the first surface and a lateral surface joining the first surface and the second surface, the ophthalmic wafer having a blunt edge between the first surface and the lateral surface; wherein the method comprises:
(a) providing the ophthalmic wafer;
(b) forming a mold cavity within a molding system;
(c) filling the remaining of the mold cavity with at least one polymerizable composition;
(d) curing the at least one polymerizable composition to harden it, thus forming the lens substrate thereby obtaining the ophthalmic article.

Further non-limiting and optional features are presented below.

The blunt edge may have a Ra roughness of 0.5 µm or less, 0.45 µm or less, 0.4 µm or less, or 0.3 µm or less.

Providing the ophthalmic wafer may comprise (a1) injection-molding an unfinished wafer having a first surface, a second surface, a lateral surface joining the first surface and the second surface and a rough edge between the first surface ant the lateral surface.

Providing the ophthalmic wafer may comprise (a2) contouring the unfinished wafer thereby proving the lateral surface and the rough edge, notably after injection-molding.

In one embodiment, the blunt edge is a polished edge until the Ra roughness thereof is 0.5 µm or less, 0.45 µm or less, 0.4 µm or less, or 0.3 µm or less.

In such case, providing the ophthalmic wafer may further comprise, after injection-molding, (a31) polishing the rough edge at an angle of at least 5°, at least 10°, at least 15° or at least 20° with respect to the first surface thereby obtaining the ophthalmic wafer having the polished edge with the blunt surface forming an angle with the first surface of at least 5°, at least 10°, at least 15° or at least 20°. If contouring the unfinished wafer is performed, it is carried out before polishing the rough edge.

In another embodiment, the blunt edge is a chamfered edge. The chamfered edge may have a chamfer surface forming an angle of 10 to 80° with the first surface.

In such case, providing the ophthalmic wafer may further comprise, after injection-molding, (a32) chamfering the rough edge thereby providing the ophthalmic wafer with the chamfered edge. If contouring the unfinished wafer is performed, it is carried out before chamfering the rough edge. In some cases, providing the ophthalmic wafer may further comprise (a33) polishing the chamfered edge.

In all embodiments, the lateral surface may have a width of at least 0.2 mm.

The ophthalmic wafer may comprise microstructures. For example, when the ophthalmic wafer is made of a plurality of layers, at least one of the layers has microstructures. Preferably, the microstructures are configured to control myopia.

When the ophthalmic wafer comprises microstructures, injection-molding may comprise (a11) providing wafer mold parts, each with a molding face, wherein at least one of the wafer mold parts exhibits microstructures on its molding face; and (a12) injecting a wafer composition into the mold formed by the mold parts, thereby obtaining the unfinished wafer.

In all cases, the at least polymerizable composition may have a high or low refractive index once cured.

In all cases, the molding system may comprise a front mold, a back mold and at least one tape joining the front mold and the back mold together.

In all cases, the molding system may be a gasket system.

In all cases, the ophthalmic article may further comprise another lens substrate in contact with the second surface of the ophthalmic wafer. In such case, curing the at least one polymerizable composition to harden it also results in the formation of the other lens substrate.

In this latter case, the ophthalmic wafer may have another blunt edge between the second surface and the lateral surface. The other blunt edge may have a Ra roughness of 0.5 µm or lower, 0.45 µm or lower, 0.4 µm or lower, or 0.3 µm or lower. The other blunt edge may a polished edge. The polished edge may have a blunt surface forming an angle with the second surface of at least 5°, at least 10°, at least 15° or at least 20°. The other blunt edge may alternatively be a chamfered edge, notably with a chamfer surface forming an angle of 10 to 80° with the second surface.

One same polymerizable composition may be used for both the lens substrate and the other lens substrate. Alternatively, different polymerizable compositions may be used for the lens substrate and the other lens substrate.

In another aspect, the present invention provides an ophthalmic article comprising:
a lens substrate and
an ophthalmic wafer with a first surface in contact with the lens substrate, a second surface opposite the first surface and a lateral surface joining the first surface and the second surface,
the ophthalmic wafer having a blunt edge between the first surface and the lateral surface.

Further non-limiting and optional features are presented below.

The blunt edge may have a Ra roughness of 0.5 µm or lower, 0.45 µm or lower, 0.4 µm or lower, or 0.3 µm or lower.

In one embodiment, the blunt edge is a polished edge. The polished edge may have a blunt surface forming an angle with the first surface of at least 5°, at least 10°, at least 15° or at least 20°.

In another embodiment, the blunt edge is a chamfered edge. In such case, the chamfered edge may have a chamfer surface forming an angle of 10 to 80° with the first surface.

In all cases, the lateral surface may have a width of at least 0.2 mm.

In all cases, the ophthalmic wafer may comprise microstructures. When the ophthalmic wafer is made of a plurality of layers, at least one of the layers has microstructures. Preferably, the microstructures are configured to control myopia.

In all cases, the lens substrate may be made of a polymerizable composition. In such case, the polymerizable composition may be a high or low refractive index once cured.

The ophthalmic article is preferably free of bubbles between the ophthalmic wafer and the lens substrate.

The ophthalmic article may further comprise another lens substrate in contact with the second surface of the ophthalmic wafer. In such case, the ophthalmic wafer may have another blunt edge between the second surface and the lateral surface. The other blunt edge may have a Ra roughness of 0.5 µm or lower, 0.45 µm or lower, 0.4 µm or lower, or 0.3 µm or lower. The other blunt edge may be a polished edge. The polished edge may have a blunt surface forming an angle with the second surface of at least 5°, at least 10°, at least 15° or at least 20°. Alternatively, the other blunt edge may be a chamfered edge, notably a chamfer surface forming an angle of 10 to 80° with the second surface.

The other lens substrate may be made of a polymerizable composition. In such case, the polymerizable composition of the other lens substrate may have a high or low refractive index once cured.

The lens substrate and the other lens substrate may be made of the same polymerizable composition or different polymerizable compositions.

Preferably, the ophthalmic article is free of bubble between the ophthalmic wafer and the other lens substrate.

This ophthalmic article may be a semi-finished ophthalmic lens or a finished ophthalmic lens. Thus, it can be used in an eyewear having ophthalmic lenses as at least one of the ophthalmic lenses.

### Brief Description of Drawings

Other features, details and advantages will be shown in the following detailed description and on the figures, on which:

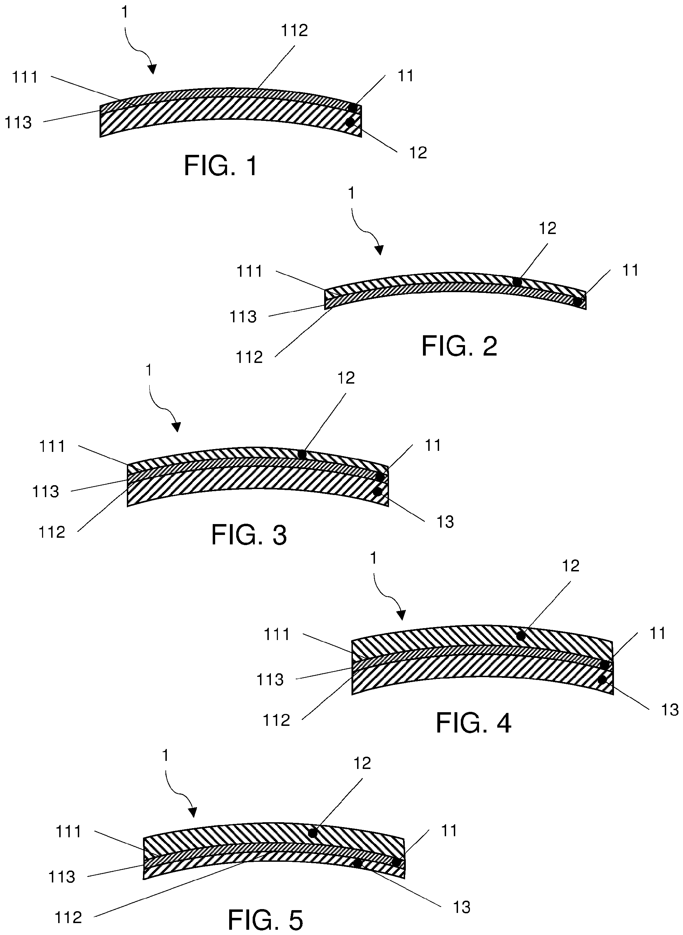

Fig. 1 schematically illustrates one example of an ophthalmic article according to the invention with an ophthalmic wafer and a lens substrate contacting a contacting surface of the ophthalmic wafer, wherein the contacting surface is concave.
Fig. 2 schematically illustrates one example of an ophthalmic article according to the invention with an ophthalmic wafer and a lens substrate contacting a contacting surface of the ophthalmic wafer, wherein the contacting surface is convex.
Fig. 3 schematically illustrates one example of an ophthalmic article according to the invention with an ophthalmic wafer and a lens substrate on both sides of the ophthalmic wafer, the lens substate contacting the convex contacting surface of the ophthalmic wafer being thinner than the lens substate contacting the concave contacting surface of the ophthalmic wafer.
Fig. 4 schematically illustrates one example of an ophthalmic article according to the invention with an ophthalmic wafer and a lens substrate on both sides of the ophthalmic wafer, the lens substate contacting the convex contacting surface of the ophthalmic wafer having substantially the same thickness as the lens substate contacting the concave contacting surface of the ophthalmic wafer.
Fig. 5 schematically illustrates one example of an ophthalmic article according to the invention with an ophthalmic wafer and a lens substrate on both sides of the ophthalmic wafer, the lens substate contacting the convex contacting surface of the ophthalmic wafer being thicker the same thickness as the lens substate contacting the concave contacting surface of the ophthalmic wafer.

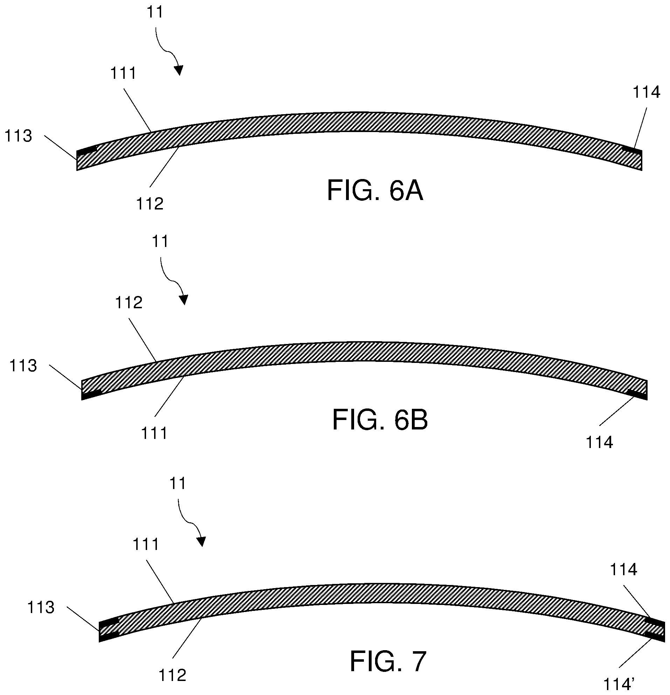

Fig. 6A schematically illustrates one example of an ophthalmic wafer having only one blunt surface and shows one possible position of the blunt surface according to the invention.
Fig. 6A schematically illustrates one example of an ophthalmic wafer having only one blunt surface and shows another possible position of the blunt surface according to the invention.
Fig. 7 schematically illustrates one example of an ophthalmic wafer having two blunt surfaces and shows the positions of the blunt surfaces according to the invention.
Fig. 8A is a magnified view of the rim of an example of ophthalmic article according to the invention and focuses on showing a polished blunt surface when the ophthalmic wafer of Fig. 6A is used.
Fig. 8B is a magnified view of the rim of an example of ophthalmic article according to the invention and focuses on showing a polished blunt surface when the ophthalmic wafer of Fig. 6B is used.
Fig. 9 is a magnified view of the rim of an example of ophthalmic article according to the invention and focuses on showing polished blunt surfaces when the ophthalmic wafer of Fig. 7 is used.
Fig. 10A is a magnified view of the rim of an example of ophthalmic article according to the invention and focuses on showing a chamfered blunt surface when the ophthalmic wafer of Fig. 6A is used.
Fig. 10B is a magnified view of the rim of an example of ophthalmic article according to the invention and focuses on showing a chamfered blunt surface when the ophthalmic wafer of Fig. 6B is used.
Fig. 11 is a magnified view of the rim of an example of ophthalmic article according to the invention and focuses on showing chamfered blunt surfaces when the ophthalmic wafer of Fig. 7 is used.
Fig. 12 is a diagram showing the steps of the method for manufacturing an ophthalmic article according to one example of the invention.
Fig. 13 is a diagram showing the steps of providing the ophthalmic wafer according to one example of the invention.
Fig. 14 is a diagram showing the steps of injection-molding an unfinished wafer according to one example of the invention.
Fig. 15A is a diagram showing the steps of forming a mold cavity of a molding system according to one example of the invention.
Fig. 15B is a diagram showing the steps of forming a mold cavity of a molding system according to another example of the invention.
Fig. 16 is a diagram showing the steps of forming a mold cavity of a molding system according to still another example of the invention.
Fig. 17 is a diagram showing the steps of forming a front mold assembly according to one example of the invention.
Fig. 18 is a diagram showing the steps of forming a back mold assembly according to one example of the invention.
Fig. 19 is a photograph showing an ophthalmic article according to the invention. The ophthalmic article has an ophthalmic wafer and two lens substrates on either side of the ophthalmic wafer, the ophthalmic wafer having two chamfered edges.
Fig. 20 is a photograph showing an ophthalmic article which was not obtained through the method of the invention. The ophthalmic article has an ophthalmic wafer and two lens substrates on either side of the ophthalmic wafer, the ophthalmic wafer having no blunt edges.

### Detailed Description

A first embodiment of an ophthalmic article according to the invention will be described hereafter with reference to Fig. 1 and Fig. 2. Such ophthalmic article may typically be a semi-finished ophthalmic lens or a finished ophthalmic lens. Thus, it may be used in an eyewear, such as ophthalmic glasses, as one or both lenses thereof.

The ophthalmic article **1** comprises an ophthalmic wafer **11** and a lens substrate **12.** Preferably, the edge of the ophthalmic wafer **11** and the edge of the lens substrate **12** are flushed with each other.

The ophthalmic wafer **11** comprises a first surface **111** in contact with the lens substrate 12, a second surface **112** opposite the first surface **111** and a lateral surface **113** joining the first surface **111** and the second surface **112.** The first surface **111** will be called hereafter the contacting surface. Here, the contacting surface **111** and the second surface **112** are provided on opposite faces of the ophthalmic wafer **11.** The ophthalmic wafer **11** has a blunt edge **114** between the contacting surface **111** and the lateral surface **113.**

Here, a blunt edge means an edge with a surface free from filaments, and preferably a surface with a Ra roughness of lower than 0.5 µm, preferably lower than 0.45 µm, lower than 0.40 µm or even lower than 0.3 µm. Indeed, the inventors have discovered that when the edge is free from filaments, notably created during contouring, or has a roughness of lower than 0.5 µm, formation of bubbles is limited or even prevented. It is assumed that these filaments or roughness of higher than 0.5 µm entrap small pockets of air which expand during curing, thus creating bubbles at the interface between the substrate and the ophthalmic wafer.

The blunt edge **114** of the ophthalmic wafer **11** prevents the formation of bubbles during casting of the lens substrate **12** onto the ophthalmic wafer **11.** Thus, the interface between the ophthalmic wafer **11** and the lens substrate **12** presents very few bubbles and especially in comparison with an ophthalmic article with an ophthalmic wafer without such blunt edge. Preferably, the interface between the ophthalmic wafer **11** and the lens substrate **12** is free from bubbles. Details of the blunt edge **114** will be described further down the present description.

The lateral surface **113** may have a width of at least 0.2 mm.

The interface between the ophthalmic wafer **11** and the lens substrate **12** is preferably free of bubbles.

The ophthalmic wafer **11** may comprise microstructures **115.** The microstructures **115** can be configured to have a variety of functions, for example myopia control or polarization. When the ophthalmic wafer is made of a single layer, the microstructures **115** are preferably on the contacting surface **111** of the ophthalmic wafer **11.** When the ophthalmic wafer **11** is made of a plurality of layers, at least one of the layers has microstructures **115.** In such case, the microstructures **115** are preferably positioned between the contacting surface **111** and the second surface **112** or on the contacting surface **111,** i.e. at the interface between ophthalmic wafer **11** and the lens substrate **12.**

The ophthalmic wafer **11** may be made of one or several thermoplastic materials such as polycarbonate (PC), alicyclic polycarbonate copolymer, poly(methyl methacrylate) (PMMA), poly(methyl methacrylimide) (PMMI), polyamide (PA), polyester, copolyester, polysulfone (PSU), cellulose triacetate (TAC), thermoplastic polyurethane (TPU), and cyclic olefin copolymer (COC). The ophthalmic wafer can also be made of one or several thermoset materials such as polyurethane, allyl diglycol carbonate, polythiourethane, episulfur polymers, epoxy, poly(meth)acrylates, polythiomethacrylates. This list of compounds does not limit the choice of thermoplastic or thermoset materials which could be used for the process for making the wafer. When the ophthalmic wafer is made of a plurality of layers, in one embodiment, all the layers may be made of thermoplastic materials. In another embodiment, all the layers may be made of thermoset materials. In still another embodiment, the wafer may be made of a combination of layers made of thermoplastic materials and layers made of thermoset materials.

The thickness of the ophthalmic wafer **11** may be 0.3 to 1.3 mm, preferably 0.5 to 0.8 mm. In all this detailed description, the thickness of an element of the ophthalmic article 1 is taken at the location where the optical axis thereof intersects the element.

The lens substrate **12** may be made of a polymerizable composition. In such case, the polymerizable composition may be a high or low refractive index once cured.

There is no limit for the thickness of the lens substrate **12,** notably if the lens substrate **12** is meant to be surfaced (usually the back face of a semi-finished lens) to obtain the required ophthalmic function. However, typically, the thickness of the lens substrate **12** may be up to 17 mm. In other cases, no material will be removed from the lens substrate **12** after it is cast, except maybe a polishing (usually the front face of a semi-finished lens or a finished lens). In such case, the thickness of the lens substrate **12** may be as low as 0.03 mm. There is no real upper Ilimit, but in this latter case, a preferred upper limit can be 1.1 mm or even 0.6 mm.

As illustrated in Fig. 1, the contacting surface **111** is a concave surface. Alternatively, as illustrated in Fig. 2, the contacting surface **111** is a convex surface. In other variant, the contacting surface **111** is flat or have a more complex shape.

A second embodiment of an ophthalmic article according to the invention will be described hereafter with reference to Fig. 3 to Fig. 5. In comparison with the first embodiment, in this second embodiment, both surfaces of the ophthalmic wafer are contacting surfaces: another lens substrate is provided to contact the second surface of the ophthalmic wafer. Description of common features is not repeated here and should be taken from the description of the first embodiment.

Therefore, as mentioned above, the ophthalmic article **1** further comprises another lens substrate **13** in contact with the second surface **112** of the ophthalmic wafer **11.** Preferably, the edge of the ophthalmic wafer **11,** the edge of the lens substrate **12,** and the edge of the other lens substrate **13** are flushed with each other.

Although not compulsory, the ophthalmic wafer **1** may have another blunt edge **114'** between the second surface **112** and the lateral surface **113.** When provided, the interface between the second face **112** of the ophthalmic wafer **11** and the lens substrate **12** is preferably free from bubbles. Details of the other blunt edge **114'** will be described further down the present description.

The thickness of the other lens substrate **13** is subjected to the same requirements as the thickness of the lens substrate **12.**

As mentioned above, the ophthalmic wafer **11** may comprise microstructures **115.** When the ophthalmic wafer **11** is made of a single layer, the microstructures may be on the first surface **111,** the second surface **112** or both. When the ophthalmic wafer **11** is made of a plurality of layers, at least one of the layers has microstructures **115.** In such case, the microstructures **115** may be positioned anywhere between the contacting surface **111** and the second surface **112,** including on the first surface **111,** i.e. at the interface between the first surface **111** of the ophthalmic wafer **11** and the lens substrate **12,** and the second surface **112,** i.e. at the interface between the second surface **112** of the ophthalmic wafer **11** and the lens substrate **12.**

In Fig. 3 to Fig. 5, the ophthalmic wafer **11** has one convex side and one concave side opposite the convex side; the lens substrate **12** is positioned on the convex side of the ophthalmic wafer **11** and the other lens substrate **13** is positioned on the concave side of the ophthalmic wafer **11.** The following description of the exemplary embodiments illustrated in Fig. 3 to Fig. 5 will be provided with such configuration.

However, it must be understood that this description also includes the embodiments where the positions of the lens substrate **12** and the other lens substrate **13** are swapped, i.e. the lens substrate **12** is positioned on the concave side and the other lens substrate **13** is positioned on the convex side of the ophthalmic wafer **11.** Therefore, this means that the first surface **111** and the second surface **112** of the ophthalmic wafer **11** may also be exchanged.

It must also be noted that the present description also includes the embodiments where the ophthalmic wafer **11** has two concave sides, in which case the lens substrate **12** is positioned on one of the concave sides and the other lens substrate **13** is position on the other one of the concave sides. The present description also includes the embodiments where the ophthalmic wafer **11** has two convex sides, in which case the lens substrate **12** is positioned on one of the convex sides and the other lens substrate **13** is position on the other one of the convex sides.

Fig. 3 illustrates an ophthalmic article **1** where the lens substrate **12** is thinner than the other lens substrate **13.** Fig. 4 illustrates an ophthalmic article **1** where the lens substrate **12** is substantially of the same thickness as the other lens substrate **13.** Fig. 5 illustrates an ophthalmic article **1** where the lens substrate **12** is thicker than the other lens substrate **13.**

Fig. 6A, Fig. 6B and Fig. 7 show for each of the embodiments described above the position of the blunt surface(s) **114, 114'** of the ophthalmic wafer **11.** In Fig. 6A and Fig. 7, the ophthalmic wafer **11** is illustrated as having a convex first surface **111** and a concave second surface **112.** The shapes of the first surface **111** and second surface **112** being reversed in Fig. 6B.

However, it must be emphasized that the present description also includes the embodiments where the first surface **111** is concave and the second surface **112** is convex. This means that, the present description comprises the cases where:
only one blunt surface **114** is provided and is on the first surface **111** of the wafer **11** and the first surface **111** is concave;
only one blunt surface **114** is provided and is on the first surface **111** of the wafer **11** and the first surface **111** is convex;
two blunt surfaces **114, 114'** are provided respectively on the first surface **111** and the second surface **112** of the wafer **11.**

The present description also comprises the embodiments where both the first surface **111** and the second surface **112** are convex or where both the first surface **111** and the second surface **112** are concave.

Fig. 6A and Fig. 6B illustrate the case where the ophthalmic wafer **11** has only one blunt surface **114:** between the first surface **111** and the lateral surface **113.** Fig. 7 illustrates the case where the ophthalmic wafer **11** has two blunt surfaces **114, 114':** between the first surface **111** and the lateral surface **113** and between the second surface **112** and the lateral surface **113.**

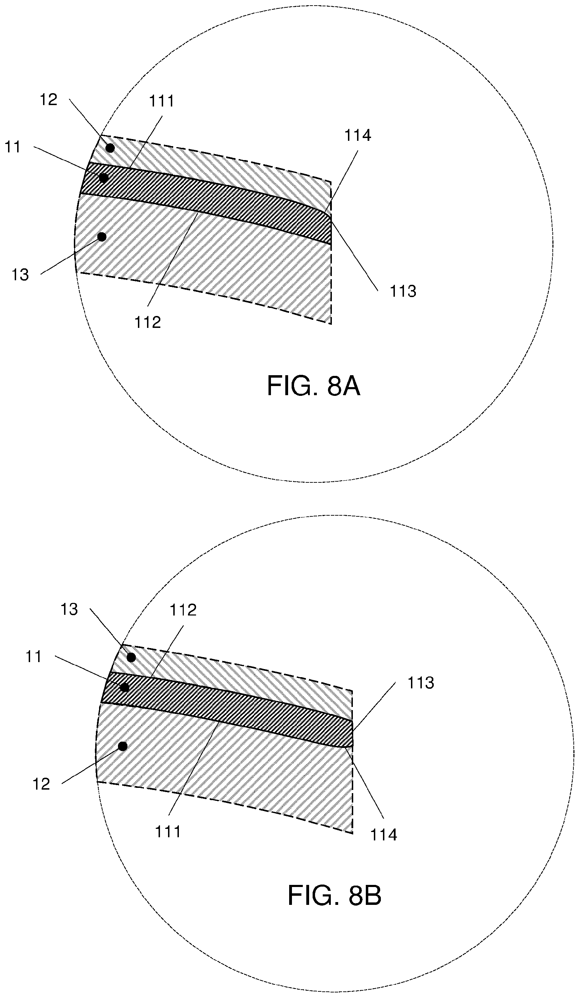

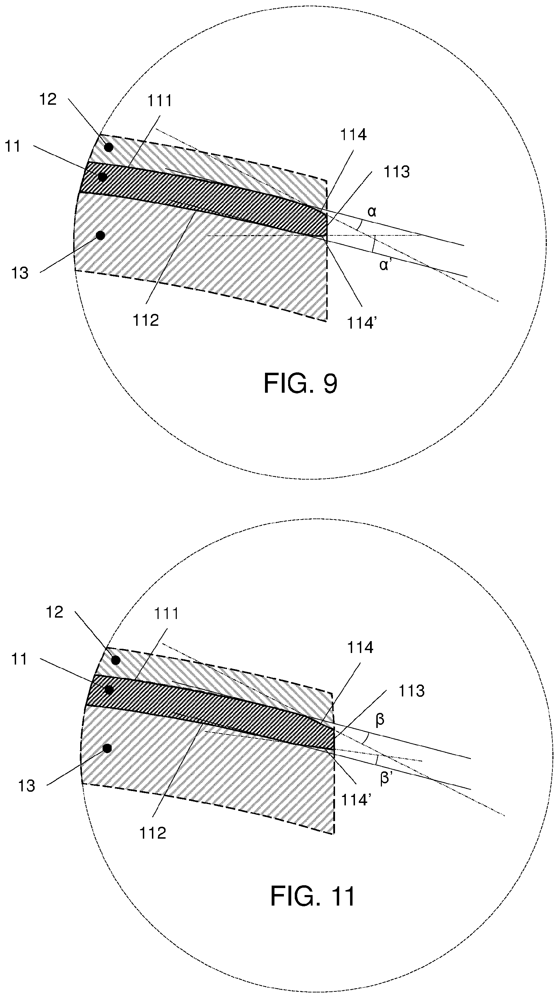

Fig. 8A, Fig. 8B and Fig. 9 show zoomed portions of Fig. 6A, Fig. B and Fig. 7 respectively and where the blunt surfaces **114, 114'** are provided as polished edges. The lens substrates **12, 13** are also shown in a lighter shade to make the elements of the ophthalmic wafer **11** more visible. Here, a "polished edge" means an edge which is free of filaments, such as an edge with a Ra roughness of lower than 0.5 µm, preferably lower than 0.45 µm, still preferably lower than 0.4 µm or even lower than 0.3 µm.

In some cases, each of the polished edges forms an angle **α** with the corresponding first or second surface **111, 112** of at least 5°, at least 10°, at least 15° or at least 20°. For the sake of determination of this angle α, a virtual line **L111, L112** is drawn of a cross-section of the ophthalmic wafer **11** passing through the optical center thereof and from the rim of the corresponding first or second surface **111, 112** so that the virtual line **L111, L112** is tangent to that surface at the rim thereof; further, another virtual line **L114, L114'** to correspond to a majority of the polished edge. Angle α is measured between virtual line **L111, L112** and virtual line **L114, L114'.**

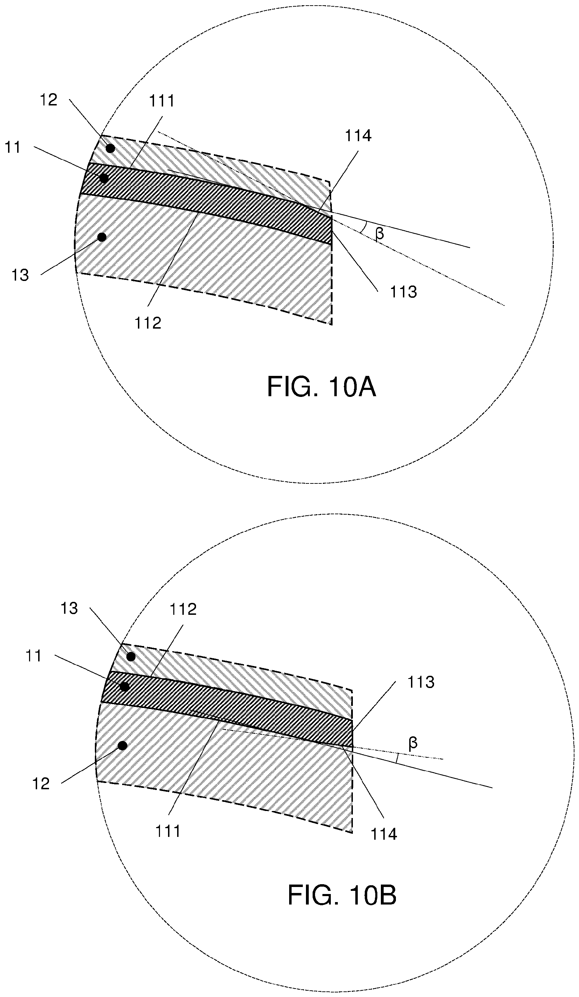

Fig. 10A, Fig. 10B and Fig. 11 show zoomed portions of Fig. 6A, Fig. 6B and Fig. 7 respectively, where blunt surfaces **114, 114'** provided as chamfered edges. The lens substrates **12, 13** are also shown in a lighter shade to make the elements of the ophthalmic wafer **11** more visible. Each of the chamfered edges has a chamfer surface forming an angle of 10 to 80° with the corresponding first surface **111** or second surface **112.** For the sake of determination of this angle **β**, a virtual line **L111, L112** is drawn of a cross-section of the ophthalmic wafer **11** passing through the optical center thereof and from the rim of the corresponding first or second surface **111, 112** so that the virtual line **L111, L112** is tangent to that surface at the rim thereof; further, another virtual line **L114, L114'** is drawn to correspond to the chamfer surface. Angle **β** is measured between virtual line **L111, L112** and virtual line **L114, L114'.**

The purpose of angle **β** is to break the angle formed by the first surface **111** and the lateral surface **113.**

Although not illustrated, the present description also comprises the embodiments where two blunt surfaces **114, 114'** are provided and where the blunt surfaces **114, 114'** are of different nature; this includes (i) the blunt surface **114** of the first surface **111** is polished and the blunt surface **114'** of the second surface **112** is chamfered, and (ii) the blunt surface **114** of the first surface **111** is chamfered and the blunt surface **114'** of the second surface **112** is polished.

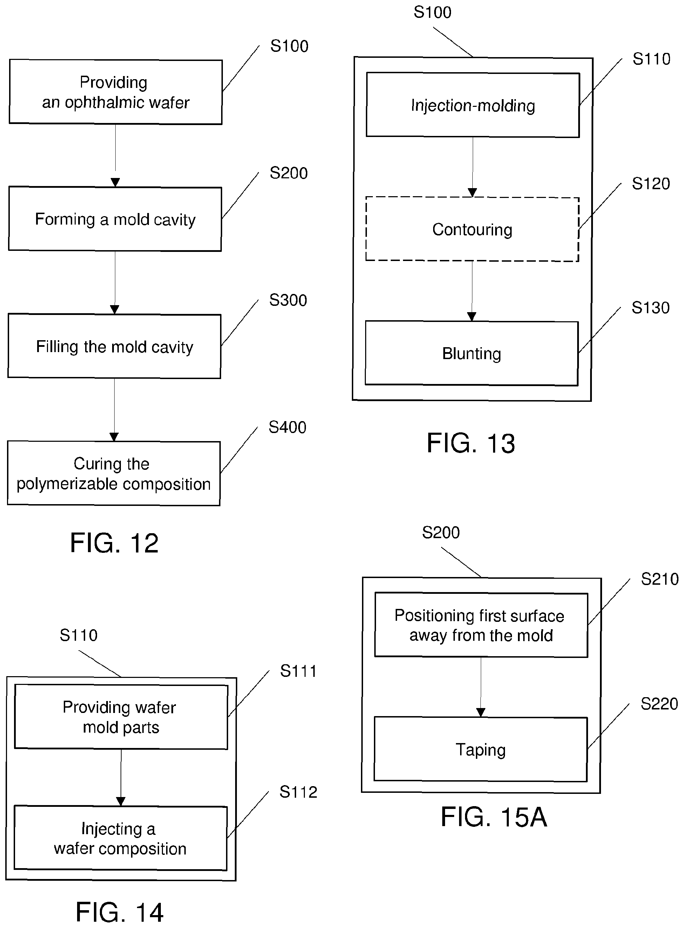

A first embodiment of method for manufacturing an ophthalmic article according to the first embodiment of the ophthalmic article described above will be described hereafter with reference to Fig. 12 to Fig. 18.

As shown in Fig. 12, the method comprises: providing the ophthalmic wafer **S100;** forming a mold cavity **S200** with the ophthalmic wafer; filling **S300** the remaining of the mold cavity with at least one polymerizable composition; and curing **S400** the at least one polymerizable composition to harden it, thus forming the lens substrate thereby obtaining the ophthalmic article.

Here, providing the ophthalmic wafer **S100** includes the case where the ophthalmic wafer **11** is provided already in the state described above, i.e. with the blunt edge **114.** Thus, the features detailed above for the ophthalmic wafer **11** within the ophthalmic article **1** also apply to the ophthalmic wafer **11** at providing the ophthalmic wafer **S100.**

Alternatively, providing the ophthalmic wafer **S100** comprises manufacturing the ophthalmic wafer **11,** in which case, providing the ophthalmic wafer **S100** comprises: injection-molding **S110** an unfinished wafer **21** having a first surface **211,** a second surface **212,** a lateral surface **213** joining the first surface **211** and the second surface **212** and a rough edge **214** between the first surface **211** and the lateral surface **213;** and blunting **S130** the rough edge **214** to obtain a blunt edge **114,** as shown in Fig. 13. Here "rough edge" means an edge with a Ra roughness of more than 0.5 µm.

As shown in Fig. 14, injection-molding **S110** may typically comprise providing wafer mold parts **S111,** each wafer mold part **31, 32** with a wafer molding face **311, 321,** and injecting a wafer composition **S112** into the wafer mold **3** formed by the wafer mold parts **31, 32,** thereby obtaining the unfinished wafer **21.**

In case there are microstructures in the ophthalmic wafer **11,** at least one of the wafer mold parts **31, 32** exhibits microstructures on its wafer molding face **311, 321.**

The wafer composition may comprise one or several thermoplastic materials such as polycarbonate (PC), alicyclic polycarbonate copolymer, poly(methyl methacrylate) (PMMA), poly(methyl methacrylimide) (PMMI), polyamide (PA), polyester, copolyester, polysulfone (PSU), cellulose triacetate (TAC), thermoplastic polyurethane (TPU), and cyclic olefin copolymer (COC). The ophthalmic wafer can also be made of one or several thermoset materials such as polyurethane, allyl diglycol carbonate, polythiourethane, episulfur polymers, epoxy, poly(meth)acrylates, polythiomethacrylates. This list of compounds does not limit the choice of thermoplastic or thermoset materials which could be used for the process for making the wafer. When the ophthalmic wafer is made of a plurality of layers, in one embodiment, all the layers may be made of thermoplastic materials. In another embodiment, all the layers may be made of thermoset materials. In still another embodiment, the wafer may be made of a combination of layers made of thermoplastic materials and layers made of thermoset materials.

In few cases, injection-molding **S110** results in a suitable unfinished wafer ready for blunting **S130.** In most cases, however, another step is needed after injection-molding **S110** and before blunting **S130:** contouring **S120** the unfinished wafer thereby proving the lateral surface **213** and the rough edge **214,** as shown in dashed line in Fig. 13.

Such contouring **S120** remove ophthalmic wafer material at the edge of the ophthalmic wafer. Such contouring **S120** typically leaves a blunt edge with an edge surface on the ophthalmic wafer exhibiting filaments extending up to 5 to 10 µm from the surface of the ophthalmic wafer.

At the end of blunting **S130,** the lateral surface of the ophthalmic wafer **11** may have a width of at least 0.2 mm.

In one embodiment, blunting **S130** comprises polishing the rough edge at an angle of at least 20° with respect to the first surface 111 thereby obtaining the ophthalmic wafer **11** having the polished edge **114** with the blunt surface forming an angle α with the first surface **111** of at least 20°.

Polishing is preferably carried out until the blunt surface reaches a Ra roughness of 0.5 µm or lower, preferably lower than 0.45 µm, lower than 0.4 *m or even lower than 0.3 µm. Typically, polishing such as mirror polishing enables to reach Ra roughness of as low as 0.05 µm or even lower.

In another embodiment, blunting **S130** comprises chamfering the rough edge thereby providing the ophthalmic wafer **11** with the chamfered edge **114.** The resulting chamfered edge may have a chamfer surface forming an angle of 10 to 80° with the first surface **111.**

Chamfering may be performed through various methods known to the skilled person. Preferably, chamfering is typically performed using a grinding wheel or a grinding belt. In some cases, a polishing may be carried out following chamfering to ensure that the Ra roughness of the blunt surface reaches 0.5 µm or lower, preferably 0.45 µm or lower, still preferably 0.4 µm or lower or even 0.3 µm or lower.

Forming a mold cavity **S200** is typically performed so that the first surface **111** of the ophthalmic wafer **11** is away from a mold part of a molding system to form a mold cavity.

More particularly, the mold system may comprise a front mold, a back mold and at least one tape joining the front mold and the back mold together. The front mold may have a concave or convex molding surface. The back mold may have a concave or convex surface. In other words, all combinations are considered: front mold with concave molding surface while back mold with convex molding surface yielding an ophthalmic article with a convex front face and a concave rear face; front mold with convex molding surface while back mold with concave molding surface yielding an ophthalmic article with a concave front face and a convex rear face; both frond mold and rear mold with concave molding surfaces yielding an ophthalmic article with convex front and rear faces; and both front mold and rear mold with convex molding surface yielding an ophthalmic article with convex front and rear faces.

In some cases, the ophthalmic wafer **11** is one of the front mold and back mold.

In all these cases, as shown in Fig. 15A, forming the mold cavity **S200** comprises positioning the first surface **S210** of the ophthalmic wafer **11** at a desired distance from a front mold or a back mold; taping **S220** the edges of the front mold or back mold and ophthalmic wafer **11** together to hold the ophthalmic wafer 11 and the front mold or back mold in place and at desired distance from one each other.

In some other cases, the second surface **112** of the ophthalmic wafer **11** corresponds to the convexity of the molding surface of the mold part against which it is positioned; i.e. convex if the molding surface of the mold part is concave and concave if the molding surface of the mold part is convex. The second surface **112** of the ophthalmic wafer **11** may be positioned against the molding surface of the front mold or the back mold.

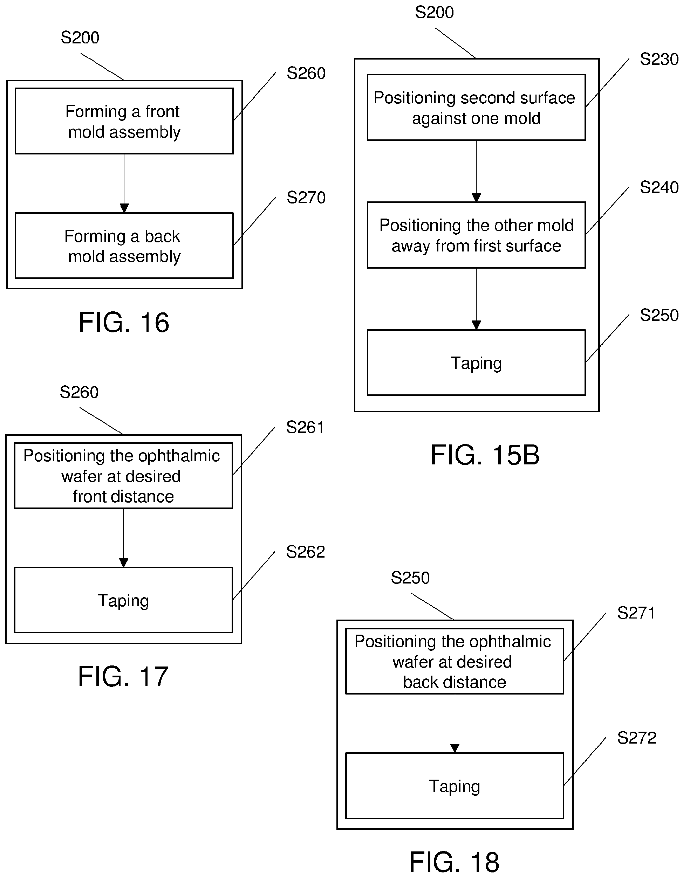

In all these other cases, as shown in Fig. 15B, forming the mold cavity **S200** comprises positioning the second surface **S230** against the molding surface of one of the front mold and back mold; positioning the molding surface of the other one of the front mold and the back mold **S240**so that its molding surface is at a desired distance from the first surface **111** of the ophthalmic wafer **11;** taping **S250** the edges of the front mold, ophthalmic wafer **11** and back mold together to hold them in place and at desired distance from one each other.

Alternatively, the molding system may be a gasket system having a gasket, typically made of rubber, and two mold parts. The gasket typically has a hollow cylindrical shape with an inner surface defining an inner space into which one or two mold parts are inserted at one or both ends of the gasket. When there is only one mold part, the ophthalmic wafer is inserted into the gasket at the other ends thereof. The gasket also has notches on its inner surface to hold the ophthalmic wafer into place, thereby forming one or more molding cavities. Again, the ophthalmic wafer **11** may be used as one of the mold part.

In such case, forming the mold cavity comprises placing the mold part(s) and ophthalmic wafer inside the gasket, the gasket holding all the components in place.

The polymerizable composition used in filling **S300** may have a high or low refractive index once cured. For example, the polymerizable composition comprises thermoplastic materials such as polycarbonate (PC) or polymethyl metacrylate (PMMA), or thermoset materials such as thiourethane.

Curing **S400** polymerizes the polymerizable composition.

Thanks to the blunt edge provided on the first surface **111,** i.e. the surface of the ophthalmic wafer **11** in contact with the lens substrate **12,** during filling **S300** and curing **S400** few bubbles if none form between the ophthalmic wafer **11** and the lens substrate **12.**

A second embodiment of method for manufacturing an ophthalmic article according to the second embodiment of the ophthalmic article described above will be described hereafter with reference to Fig. 13 to 18. In comparison with the first embodiment, in this second embodiment, both surfaces of the ophthalmic wafer are contacting surfaces: another lens substrate is provided to contact the second surface of the ophthalmic wafer. Description of common features is not repeated here and should be taken from the description of the first embodiment.

Here, providing the ophthalmic wafer **S100** includes the case where the ophthalmic wafer **11** is provided already in the state described above, i.e. either with the blunt edge **114** between the first surface **111** and the lateral surface **113** and without a blunt edge between the second surface **112** and the lateral surface **113** (single blunt edge); or with the blunt edge **114** between the first surface **111** and the lateral surface **113** and the other blunt edge **114'** between the second surface **112** and the lateral surface **113** (double blunt edges). Thus, the features detailed above for the ophthalmic wafer 11 within the ophthalmic article **1** also apply to the ophthalmic wafer **11** at providing the ophthalmic wafer **S100.**

Alternatively, providing the ophthalmic wafer **S100** comprises manufacturing the ophthalmic wafer **11.** In such case, the obtained unfinished wafer **21** at the end of this step has a first surface **211,** a second surface **212,** a lateral surface **213** joining the first surface **211** and the second surface **212,** a rough edge **214** between the first surface **211** and the lateral surface **213,** and another rough edge **214'** between the first surface **212** and the lateral surface **213.**

In case of the single blunt edge, the steps for providing the ophthalmic wafer **S100** is the same as the first embodiment of the method: the other rough edge **214'** is not blunted. Thus, they are not repeated here.

In the following, additional particulars will be provided for the case of double blunt edges. All details provided above regarding one blunt edge holds true here but are adapted to two blunt edges as described below.

When contouring **S120** is provided, contouring **S120** further results in the formation of the other rough edge **214'.**

With regard to blunting **130** is performed in the same way as for the blunting of the rough edge **214** into the blunt edge **114.** The description thereof should then be read by replacing the first surface **211** with the second surface **212** of the rough wafer **21,** the rough edge **214** with the other rough edge **214'** and the blunt edge **114** with the other blunt edge **114'.**

Different methods for blunting may be applied to each of the blunt edge **214** and the other blunt edge **214'.** Preferably, the same method for blunting is used for blunting both the blunt edge **214** and other blunt edge **214'.**

By contrast with the first embodiment, forming the mold cavity **S200** in this second embodiment is typically performed so that both the first surface **111** and the second surface **112** of the ophthalmic wafer **11** are at desired distances from the mold parts of the molding system, thus leaving a cavity portion on both sides of the ophthalmic wafer **11.**

In case the mold system may comprise a front mold, a back mold and at least one tape joining the front mold and the back mold together, the first surface **111** of the ophthalmic wafer **11** may face the front mold and the second surface **112** of the ophthalmic wafer **11** the back mold.

Thus, as shown in Fig. 16, Fig. 17 and Fig. 18, forming the mold cavity **S200** may comprise forming a front mold assembly **S260** by positioning **S261** the first surface **111** of the ophthalmic wafer **11** facing the molding surface of the front molt at the desired front distance **D1** and taping **S262** the edges of the front mold and ophthalmic wafer **11** together using a front tape; and forming a back mold assembly **S270** by positioning **S271** the second surface **112** of the ophthalmic wafer **11** facing the molding surface of the back mold at the desired back distance **D2** and taping **S272** the edges of the ophthalmic wafer **11** and back mold together using a back tape.

Forming a front mold assembly **S260** and forming a back mold assembly **S270** may be performed in any order:
(i) first the front mold assembly then the back mold assembly, in such case, the front mold assembly comprises the front mold and the ophthalmic wafer **11** (the front tape contacting the edges of the front mold and the ophthalmic wafer) and the back mold assembly comprises the front mold, the ophthalmic wafer **11,** and the back mold (the back tape contacting the front tape and the edge of the back mold, possibly also what remains of the edge of the ophthalmic wafer on the correspond side thereof); and
(ii) first the back mold assembly then the front mold assembly, in such case, the back mold assembly comprises the ophthalmic wafer **11** and the back mold (the back tape contacting the edges of the ophthalmic wafer **11** and the back mold) and the front mold assembly comprises the front mold, the ophthalmic wafer **11,** and the back mold (the front tape contacting the back tape and the edge of the front mold, possibly also what remains of the edge of the ophthalmic wafer on the correspond side thereof).

Again, the molding system may be a gasket system as described above. Here, the ophthalmic wafer is not used as a mold part so that two mold parts are necessary.

Filling **S300** in this second embodiment of the method comprises filling the cavity on the side of the first surface **111** of the ophthalmic wafer **11** with a first polymerizable composition and filling the cavity on the side of the second surface **112** with a second polymerizable composition.

Each one of the first polymerizable composition and the second polymerizable composition may have a high or low refractive index once cured. For example, each one of the polymerizable compositions may be independently one of the materials mentioned above.

The first polymerizable composition and the second polymerizable composition may be different or the same.

Curing **S400** polymerizes the first and second polymerizable compositions.

### Examples

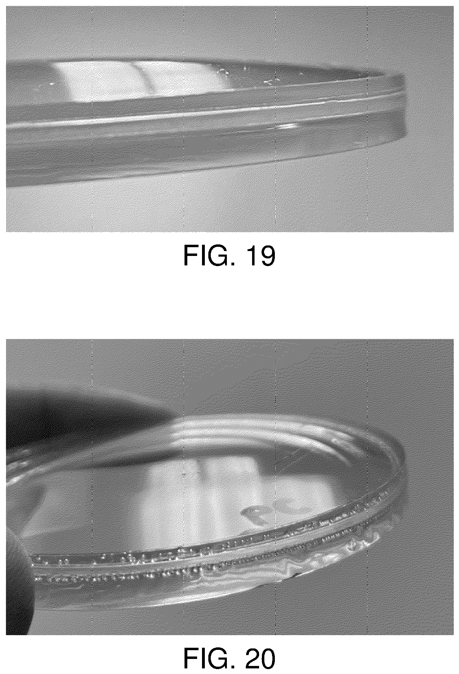

Fig. 19 shows the results the method for manufacturing an ophthalmic article according to the present invention using an ophthalmic wafer with a chamfered edge on each side thereof. No bubbles between the ophthalmic wafer and the lens substrate can be observed. Ophthalmic articles with an ophthalmic wafer with one or two polished edges were also obtained according to the method for manufacturing an ophthalmic article of the present invention. The same result could be observed on these ophthalmic articles.

Fig. 20 shows the results the method for manufacturing an ophthalmic article prepared with an ophthalmic wafer without any blunt edges. Bubbles are observable on both sides of the ophthalmic wafer.

This shows that when a blunt edge is provided on the ophthalmic wafer, the resulting article is of superior quality as no bubbles are formed during filling **S300** and curing **S400.**

## Claims

1. A method for manufacturing an ophthalmic article (1) with at least one lens substrate (12, 13) and an ophthalmic wafer (11) with a first surface (111) in contact with the lens substrate, a second surface (112) opposite the first surface and optionally in contact with a second one of the lens substrates, and a lateral surface (113) joining the first surface and the second surface, the ophthalmic wafer having a blunt edge (114) between the first surface and the lateral surface and optionally a blunt edge between the second surface and the lateral surface;
wherein the method comprises:
• providing the ophthalmic wafer (S100);
• forming a mold cavity (S200) using the ophthalmic wafer and a mold part of a molding system;
• filling the mold cavity (S300) with at least one polymerizable composition;
• curing (S400) the at least one polymerizable composition to harden it, thus forming the lens substrate thereby obtaining the ophthalmic article.

2. The method of claim 1, wherein providing the ophthalmic wafer comprises:
• injection-molding (S110) an unfinished wafer having a first surface, a second surface, a lateral surface joining the first surface and the second surface;
• contouring (S120) the unfinished wafer thereby proving the lateral surface and a rough edge between the first surface and the lateral surface;
• polishing the rough edge until the Ra roughness thereof is 0.5 µm or lower, thereby providing the ophthalmic wafer with one polished edge.

3. The method according to claim 2, wherein contouring also provides a second rough edge between the second surface and the lateral surface, and wherein polishing the rough edge also comprises polishing the second rough edge until the Ra roughness thereof is 0.5 µm or lower, thereby providing the ophthalmic wafer with two polished edges.

4. The method according to claim 1, wherein providing the ophthalmic wafer comprises:
• injection-molding (S110) an unfinished wafer having a first surface, a second surface, a lateral surface joining the first surface and the second surface;
• contouring (S120) the unfinished wafer thereby proving the lateral surface and a rough edge between the first surface and the lateral surface;
• chamfering the rough edge thereby providing the ophthalmic wafer with a blunt edge which is a chamfered edge, thereby providing the ophthalmic wafer with one chamfered edge.

5. The method according to claim 4, wherein contouring also provides a second rough edge between the second surface and the lateral surface and wherein chamfering the rough edge comprises chamfering the second rough edge, thereby providing the ophthalmic wafer with two chamfered edges.

6. The method of any one of claims 1 to 5, wherein the ophthalmic wafer comprises microstructures or is made of a plurality of layers, at least one of the layers having the microstructures.

7. The method according to claim 6, wherein the microstructures are configured to control myopia.

8. The method of any one of claims 1 to 7, wherein the molding system comprises at least one of a front mold and a back mold and at least one tape joining the at least one of a front mold and back mold with the ophthalmic wafer.

9. The method of any one of claims 1 to 7, wherein the molding system is a gasket system.

10. An ophthalmic article (1) comprising:
• a first lens substrate (12) and
• an ophthalmic wafer (11) with a first surface (111) in contact with the first lens substrate, a second surface (112) opposite the first surface, and a lateral surface (113) joining the first surface and the second surface,
the ophthalmic wafer having a blunt edge (114) between the first surface and the lateral surface.

11. The ophthalmic article of claim 10, further comprising a second lens substrate (13) in contact with the second surface of the ophthalmic wafer, and
wherein the ophthalmic wafer has a second blunt edge (114') between the second surface and the lateral surface.

12. The ophthalmic article of claim 10 or claim 11, wherein the blunt edge(s) is/are polished with a Ra roughness of 0.5 µm or lower.

13. The ophthalmic article of claim 10 or claim 11, wherein the blunt edge(s) is/are chamfered.

14. The ophthalmic article of any one of claims 10 to 13, wherein the ophthalmic wafer comprises microstructures or is made of a plurality of layers, at least one of the layers having the microstructures.

15. An eyewear comprising ophthalmic lenses, wherein the lenses are made of at least one lens substrate (12, 13) and an ophthalmic wafer (11) with a first surface (111) in contact with the lens substrate, a second surface (112) opposite the first surface and optionally in contact with a second one of the lens substrates, and a lateral surface (113) joining the first surface and the second surface, the ophthalmic wafer having a blunt edge (114) between the first surface and the lateral surface and optionally a blunt edge between the second surface and the lateral surface and optionally comprises microstructures.
